# FASCICULE DE BREVET EUROPEEN

(11) **EP 2 460 723 B1**
(45) Date de publication et mention de la délivrance du brevet: **27.01.2016**
(21) Numéro de dépôt: 11191237.4
(22) Date de dépôt: 30.11.2011
(51) Int. Cl.: B64C 25/42

(54) **Dispositif de freinage/entraînement d'une roue d'aéronef**
Vorrichtung zum Bremsen/Antrieb eines Rads eines Luftfahrzeugs
Device for braking/powering an aircraft wheel.

(30) Priorité: 06.12.2010 FR 1060093
(43) Date de publication de la demande: 06.06.2012
(73) Titulaire: Messier-Bugatti-Dowty, 78140 Vélizy-Villacoublay (FR)
(72) Inventeur: Nierlich, Florent, 92250 Lagarenne-Colombes (FR)
(74) Mandataire: Parzy, Benjamin Alain

(56) Documents cités:
- EP-A1- 1 867 567
- US-A- 3 977 631
- US-A- 4 591 313

## Description

L'invention est relative à un dispositif de freinage/ entraînement d'une roue d'aéronef.

### ARRIERE-PLAN TECHNOLOGIQUE DE L'INVENTION

On connaît du document US3977631 un dispositif de freinage/entraînement d'une roue d'aéronef qui est montée sur un essieu d'atterrisseur. Le dispositif comporte :
- une pile de disques dont une première série est solidaire en rotation de la roue et une deuxième série de disques, alternée à la première, solidaire en rotation d'un tube de torsion ;
- une couronne montée à rotation sur l'essieu et solidaire en rotation du tube de torsion ;
- des actionneurs de freinage portés par la couronne pour presser sélectivement les disques entre eux ;
- un moteur d'entraînement pour entraîner sélectivement la couronne en rotation.

Dans le mode de réalisation décrit dans ce document, les actionneurs sont du type hydraulique et sont alimentés par des canalisations hydrauliques aboutissant sur une partie fixe du dispositif. Des canaux sont aménagés dans la couronne débouchant d'une part sur les actionneurs et d'autre part dans un espace entre la partie fixe et la couronne fermée à étanchéité par des joints tournants, de sorte que les actionneurs sont alimentés hydrauliquement quelque soit la position angulaire de l'ensemble couronne/tube de torsion.

Pour freiner la roue, on commence par bloquer la couronne en rotation, et on alimente les actionneurs en pression pour presser les disques entre eux afin de créer un frottement entre les disques de la première série et les disques de la deuxième série. Les disques de la deuxième série étant immobilisés en rotation, on obtient alors un freinage de la roue.

Pour au contraire entraîner la roue en rotation, on alimente les actionneurs en pression pour presser les disques entre eux afin de créer un frottement entre les disques de la première série et les disques de la deuxième série. Puis on provoquer la rotation de la couronne au moyen du moteur d'entraînement, ce qui provoque la rotation du tube de torsion, et donc de la deuxième série de disques, ce qui conduit à l'entraînement en rotation de la roue.

On connaît les inconvénients liés à l'utilisation de joints tournants, notamment l'usure et la pollution des joints par la poussière de carbone provenant du frottement des disques entre eux. En particulier, sur le dispositif illustré, les déformations entre la partie fixe et la couronne en regard peuvent être importantes, et l'étanchéité de l'espace entre la partie fixe et la couronne peut être difficile à assurer.

L'invention a pour objet un dispositif similaire, mais utilisant des actionneurs électromécaniques. Une transposition immédiate de l'enseignement du document US3977631 consisterait à disposer sur la couronne des actionneurs électromécaniques qui serait alimentés au moyen de connecteurs électriques autorisant le mouvement de rotation entre la partie fixe et la couronne. Cependant, un tel mouvement complique singulièrement l'alimentation électrique des actionneurs.

### OBJET DE L'INVENTION

Un objet de l'invention est de proposer un dispositif de freinage/entraînement d'une roue d'aéronef à actionneurs électromécaniques dans lequel l'alimentation des actionneurs est réalisée de façon simple.

### BREVE DESCRIPTION DE L'INVENTION

En vue de la réalisation de ce but, on propose un dispositif de freinage/entraînement d'une roue d'aéronef montée sur un essieu d'atterrisseur, le dispositif comportant :
- une pile de disques des disques solidaires en rotation de la roue alternés avec des disques solidaires en rotation d'un tube de torsion ;
- une couronne montée à rotation sur l'essieu et solidaire du tube de torsion ;
- des actionneurs de freinage portés par la couronne pour presser sélectivement les disques entre eux ;
- un moteur d'entraînement pour entraîner sélectivement la couronne en rotation.

Selon l'invention, les actionneurs sont du type électromécanique et la couronne porte un secondaire d'un transformateur ayant un primaire disposé en regard de la couronne en étant immobile en rotation, le secondaire étant électriquement relié aux actionneurs et le primaire étant adapté à être relié à une source de tension non continue.

Ainsi, même si la couronne tourne, la puissance électrique est transmise par l'intermédiaire du transformateur aux actionneurs. On évite ainsi tous les inconvénients liés aux connecteurs tournants. On évite par ailleurs de faire passer la puissance par l'intérieur de l'essieu, qui peut être déjà encombré par divers équipements, comme par exemple un tachymètre. La couronne peut être placée du côté intérieur de la roue, ce qui rend la structure du dispositif plus simple.

On pourra profiter de cette liaison galvanique sans contact pour le cas échéant faire passer des ordres individuels pour chacun des actionneurs, comme par exemple une commande de l'organe de verrouillage dont les actionneurs sont habituellement équipés pour bloquer le poussoir en position, afin d'assurer le freinage de parc.

### DESCRIPTION DES FIGURES

L'invention sera mieux comprise à la lumière de la description qui suit d'un mode particulier de réalisation de l'invention, en référence aux figures annexées parmi lesquelles
- la figure 1 est une vue schématique d'un moteur d'actionneur et de son alimentation permettant la mise en oeuvre du procédé de l'invention ;
- la figure 2 est une vue schématique d'un dispositif analogue à celui de la figure 1 pour l'alimentation de plusieurs moteurs ;
- la figure 3 est une vue en coupe de la partie basse d'un atterrisseur d'aéronef équipé d'un dispositif de freinage/entraînement de la roue selon l'invention.

### DESCRIPTION DETAILLEE DE L'INVENTION

On commence d'abord par décrire un actionneur électromécanique de freinage et un mode d'alimentation de l'actionneur particulièrement adapté à la mise en oeuvre de l'invention. Cependant, l'invention n'est pas limitée à l'utilisation d'un tel type d'actionneur, ni à un -tel mode d'alimentation.

Les actionneurs électromécaniques de freinage comportent un moteur électrique adapté à déplacer un poussoir en regard de la pile de disques du dispositif pour presser sélectivement ceux-ci.

Ces moteurs sont en général commandés au moyen d'un convertisseur statique, qui, à partir d'une source de tension continue, délivre au moteur des tensions pour chaque phase du moteur, au moyen par exemple de transistors de puissance qui sont commandés pour s'ouvrir et se fermer à un rythme asservi à la position angulaire du rotor du moteur. A cet effet, le moteur est en général équipé de moyens de mesure de la position angulaire du moteur qui délivrent un signal représentatif de cette position, le signal étant exploité par le convertisseur statique pour commander l'ouverture et la fermeture des transistors de puissance et ainsi réaliser la fonction d'autopilotage, qui est réalisée par le collecteur dans le cas des moteurs à balais.

Il convient par ailleurs d'adapter la tension délivrée au niveau de couple ou de puissance requis. A cet effet, le convertisseur statique est généralement commandé pour calibrer la tension délivrée au moteur en fonction de la puissance mécanique ou du couple que celui-ci est censé délivrer. Ainsi, en réponse à une consigne de couple ou de puissance, le convertisseur statique envoie au moteur des tensions calibrées qui permettent au moteur de développer le couple ou la puissance demandés. A cet effet, divers procédés de calibration de tension sont connus, comme par exemple la modulation de largeur d'impulsion (MLI ou PWM en anglais pour pulse width modulation).

On connaît par ailleurs des architectures de pilotage comportant un contacteur statique associé à un capteur de position angulaire pour le pilotage des transistors de puissance, le contacteur statique n'assurant pas comme les convertisseurs statiques la fonction de calibration de la tension, mais uniquement la fonction d'autopilotage. La calibration de la tension est assurée par un convertisseur DC/DC amont qui délivre au contacteur statique une tension continue calibrée.

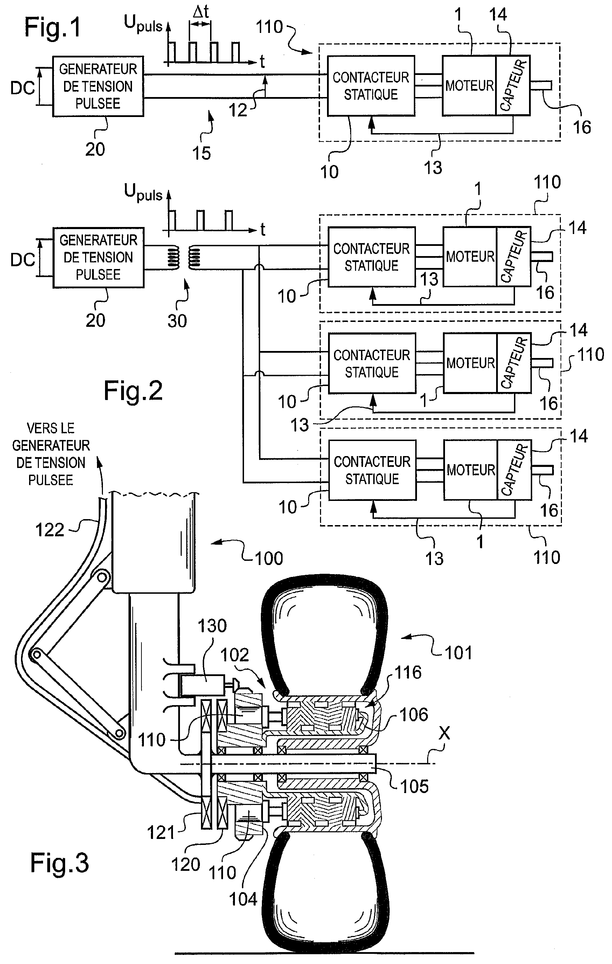

En référence à la figure 1, le procédé est utilisé pour alimenter un moteur électrique 1 du type à courant continu sans balais. Selon un aspect particulier de l'invention, le moteur 1 est associé à un contacteur statique 10 comportant des interrupteurs commandables qui découpent une tension d'entrée 12 pour délivrer à des phases du moteur 1 en fonction d'une information 13 de position angulaire du moteur délivrée par un capteur de position angulaire 14. La seule fonction du contacteur statique 10 est de découper la tension d'entrée pour générer des tensions de phase. Les interrupteurs commandables sont par exemple des thiristors.

Selon un aspect particulier de l'invention, la tension d'entrée 12 est une tension pulsée Upuls qui est générée par un générateur de tension pulsée 20 à partir d'une source de tension continue DC. Le générateur de tension pulsée 20 est de préférence un hacheur comportant des interrupteurs commandés et qui, à partir de la source de tension continue, élabore une tension monophasée pulsée de fréquence fixe (sur le diagramme de la figure est représentée la période équivalente Δt de durée constante) mais de rapport cyclique commandable afin de produire une tension pulsée de valeur moyenne commandable, par exemple en fonction d'une consigne d'effort fournie au générateur d'impulsion 20.

Le cas échéant, on pourra prévoir à l'entrée du contacteur statique 10 un étage de filtrage pour lisser la tension d'entrée avant qu'elle n'attaque les interrupteurs commandés du contacteur statique.

De préférence, le contacteur statique 10 et le capteur 14 sont disposés à proximité immédiate du moteur, voire intégrés à ce dernier. L'ensemble ainsi constitué, représenté symboliquement sur la figure par le rectangle en pointillés forme un actionneur intégré 110 qui ne comporte que deux fils d'entrée pour son alimentation au moyen de la tension d'entrée pulsée.

Les dispositions de l'invention présentent de nombreux avantages :
- le contacteur statique associé au moteur est très simple, puisqu'il n'assure que le séquençage des tensions de phase, et non leur calibration. Il peut être disposé au plus près du moteur, voire être englobé directement dans celui-ci, en intégrant un capteur de position angulaire du rotor dont le signal est directement exploité par le contacteur statique. En quelque sorte, le contacteur statique remplace le collecteur et les balais des moteurs à balais ;
- le générateur de la tension d'entrée peut également être très simple, puisqu'il délivre une tension monophasée de fréquence fixe. Seul le rapport cyclique des impulsions est variable, ce qui est technologiquement très simple à réaliser ;
- le contacteur statique et le générateur de la tension pulsée peuvent être physiquement éloignés l'un de l'autre, en étant reliés par des moyens aptes à transmettre la tension pulsée de fréquence fixe. En particulier, on peut transmettre cette tension pulsée par un transformateur, réalisant ainsi une isolation galvanique.

La tension pulsée peut être transmise du générateur de tension pulsée 20 au contacteur statique 10 au moyen de câbles 15, comme représenté ici.

Elle peut encore être transmise, comme illustré à la figure 2, au moyen d'un transformateur monophasé 30 assurant une isolation galvanique entre ces deux éléments. Compte tenu de la fréquence de la tension d'entrée 12 (typiquement de l'ordre de 100KHz), le transformateur peut être très compact.

Comme cela est illustré à la figure 2, la tension pulsée peut être facilement transmise à plusieurs ensembles moteur/contacteur statique/capteur de position angulaire au moyen du transformateur.

Ce type d'actionneur et ce mode d'alimentation sont particulièrement adaptés à l'application visée dans la présente invention, à savoir un dispositif de freinage/entraînement d'une roue portée par un atterrisseur d'aéronef.

Comme illustré à la figure 3, l'atterrisseur 100 portant des roues 101 dont les freins 102 sont équipés d'actionneurs électromécaniques de freinage 110 portés par une couronne 104. La couronne 104 est ici montée à rotation selon un axe X sur l'essieu 105 qui reçoit la roue 101. Chacun des actionneurs 110 est ici équipé d'un moteur à courant continu sans balai 1 associé à un contacteur statique 10 et un capteur de position angulaire 14, ces éléments étant disposés directement dans l'actionneur, comme indiqué précédemment. Le moteur sert à déplacer sélectivement un poussoir 20 de l'actionneur en regard d'une pile de disques de friction 116 pour sélectivement presser les disques entre eux, au moyen d'un organe de transformation transformant le mouvement de rotation du moteur en un mouvement de déplacement linéaire du poussoir. L'ensemble forme un actionneur intégré démontable en bloc de la couronne 104.

La couronne 104 solidaire d'un tube de torsion 106 qui tourne avec la couronne 104. Les disques de friction 116 comportent des disques solidaires en rotation de la roue 101 en alternance avec des disques solidaires en rotation du tube de torsion 106.

Selon l'invention, la couronne 104 porte le secondaire 120 tournant d'un transformateur rotatif dont le primaire 121 est fixé sur l'atterrisseur en regard du secondaire. Le primaire 121 est relié au moyen d'un câble 122 descendant le long de l'atterrisseur à un générateur de tension pulsée monté ici dans le fuselage de l'aéronef, tandis que le secondaire 120 est électriquement relié aux actionneurs 110 pour leur transmettre la tension pulsée reçue du primaire. Le transformateur permet ainsi la transmission de cette tension pulsée aux actionneurs intégrés 110 quelque soit la position angulaire de la couronne 104 par rapport au primaire 121. Comme décrit auparavant, cette tension pulsée est découpée et séquencée par les contacteurs statiques des actionneurs pour alimenter les phases des moteurs associés en fonction de la position angulaire du rotor du moteur.

Le primaire 121 et le secondaire 120 comportent de préférence des enroulements de forme générale circulaire s'étendant autour de l'essieu pour être en influence électromagnétique mutuelle. L'énergie électrique est ainsi transmise par voie inductive. Grâce à cette liaison galvanique sans contact, les actionneurs intégrés 110 peuvent être alimentés alors que la couronne est en train de tourner, sans nécessiter de contacts tournants.

Pour commander sélectivement la rotation de la couronne 104, un organe d'entraînement 130 en rotation de la couronne 104 est disposé sur la partie basse de l'atterrisseur et coopère ici avec la couronne par l'intermédiaire d'une liaison à pignons coniques.

Ces dispositions permettent plusieurs modes de fonctionnement :
- un premier mode de fonctionnement lors duquel la couronne 104 est bloquée en rotation, les actionneurs intégrés 110 étant alors alimentés par le transformateur dont le primaire 121 et le secondaire 120 sont immobiles l'un par rapport à l'autre, pour presser les disques du frein entre eux et ainsi ralentir la rotation de la roue. C'est le mode de freinage classique.
- un deuxième mode de fonctionnement lors duquel la couronne 104 est entraînée en rotation par l'organe d'entraînement 130. Pour entraîner la roue en rotation, il convient alors d'alimenter les actionneurs intégrés 110 par le transformateur dont le secondaire 120 tourne en regard du primaire 121. C'est le mode de déplacement autonome, lors duquel l'aéronef peut être déplacé sans l'aide de ses propulseurs.
- un troisième mode de fonctionnement lors duquel la couronne 104 est entraînée en rotation par l'organe d'entraînement 130, sans que les actionneurs intégrés 110 ne soient alimentés. C'est un mode de vérification du bon fonctionnement de l'organe entraînement 130.

L'invention n'est pas limitée à ce qui vient d'être décrit, mais englobe au contraire toute variante entrant dans le cadre défini par les revendications.

En particulier, bien que l'on ait indiqué ici que l'on utilisait des actionneurs électromécanique à moteur continu sans balais alimentés par une tension pulsée, on pourra plus généralement utiliser des actionneurs électromécaniques dont le moteur est alimentable par une tension non continue pouvant être transmise par l'intermédiaire du transformateur, quelque soit la nature du moteur et la forme de la tension transmise.

Bien qu'ici le primaire du transformateur soit directement porté par une collerette venue de matière avec l'essieu, on pourra faire porter le primaire par une partie fixe du dispositif rapportée sur l'essieu ou plus généralement sur l'atterrisseur pour être en regard du secondaire de façon à transmettre une tension non continue du primaire vers le secondaire.

Enfin, bien que dans l'exemple illustré, les enroulements du primaire et du secondaire se font face selon une direction axiale de sorte que l'entrefer soit généralement plan, le primaire et le secondaire pourront se faire face selon une direction radiale de sorte que l'entrefer soit généralement cylindrique.

## Revendications

1. Dispositif de freinage/entraînement d'une roue d'aéronef montée pour tourner sur un essieu d'atterrisseur, le dispositif comportant :
- une pile de disques (116) dont des disques solidaires en rotation de la roue alternés avec des disques solidaires en rotation d'un tube de torsion (106) ;
- une couronne (104) montée à rotation sur l'essieu et solidaire en rotation du tube de torsion ;
- des actionneurs de freinage (110) portés par la couronne pour presser sélectivement les disques entre eux ;
- un organe d'entraînement (130) pour entraîner sélectivement la couronne en rotation ;
**caractérisé en ce que** les actionneurs de freinage sont des actionneurs électromécaniques et **en ce que** la couronne porte un secondaire (120) d'un transformateur ayant un primaire (121) disposé en regard de la couronne en étant immobile en rotation, le secondaire étant électriquement relié aux actionneurs et le primaire étant adapté à être relié à une source de tension non continue.

2. Dispositif selon la revendication 1, dans lequel chaque actionneur (110) comporte :
- un moteur électrique (1) à courant continu sans balais ;
- un poussoir déplaçable linéairement et mécaniquement relié au moteur pour se déplacer en réponse à une rotation du moteur ;
- un contacteur statique pour fournir une tension polyphasée au moteur en découpant et séquençant une tension d'entrée pulsée en fonction d'une information de position angulaire d'un rotor du moteur ;
- un capteur de position angulaire du rotor délivrant la dite information,
La tension pulsée étant fournie par une source de tension pulsée de l'aéronef reliée au primaire du transformateur.

3. Atterrisseur d'aéronef comportant au moins un essieu recevant au moins une roue associée à un dispositif de freinage/entraînement de la roue selon l'une des revendications précédentes.

## Patentansprüche

1. Vorrichtung zum Bremsen/Antreiben eines Rades eines Luftfahrzeugs, das an einer Fahrwerkachse drehbar gelagert ist, wobei die Vorrichtung umfasst:
- einen Stapel Scheiben (116), von denen sich drehfest mit dem Rad verbundene Scheiben mit drehfest mit einem Torsionsrohr (106) verbundene Scheiben abwechseln;
- einen Kranz (104), der an der Achse drehbar gelagert und drehfest mit dem Torsionsrohr verbunden ist;
- Bremsaktoren (110), die vom Kranz getragen werden, um die Scheiben untereinander selektiv zu pressen;
- ein Antriebselement (130), um den Kranz in Drehrichtung selektiv anzutreiben;
**dadurch gekennzeichnet, dass** die Bremsaktoren elektromechanische Aktoren sind und dass der Kranz eine Sekundärspule (120) eines Transformators trägt, der eine Primärspule (121) hat, die gegenüber dem Kranz in Drehrichtung blockiert angeordnet ist, wobei die Sekundärspule elektrisch mit den Aktoren verbunden und die Primärspule dazu geeignet ist, mit einer Wechselspannungsquelle verbunden zu werden.

2. Vorrichtung nach Anspruch 1, wobei jeder Aktor (110) umfasst:
- einen bürstenlosen Gleichstromelektromotor (1);
- einen linear verschiebbaren Stößel, der mechanisch mit dem Motor verbunden ist, um sich in Antwort auf eine Drehung des Motors zu verschieben;
- ein statischer Schalter, um dem Motor eine Mehrphasenspannung zuzuführen, indem eine impulsförmige Eingangsspannung in Abhängigkeit einer Winkelpositionsinformation eines Rotors des Motors zerhackt und sequenziert wird;
- ein die genannte Information liefernder Sensor zum Erfassen der Winkelposition des Rotors,
wobei die Impulsspannung von einer Impulsspannungsquelle des Luftfahrzeugs geliefert wird, die mit der Primärspule des Transformators verbunden ist.

3. Luftfahrzeugfahrwerk, umfassend mindestens eine Achse, die mindestens ein Rad aufnimmt, das mit einer Vorrichtung zum Bremsen/Antreiben des Rades nach einem der vorhergehenden Ansprüche verbunden ist.

## Claims

1. A device for braking/driving an aircraft wheel mounted to rotate on an undercarriage axle, the device comprising:
• a stack of disks (116) comprising disks that are constrained in rotation with the wheel and that alternate with disks that are constrained in rotation with a torsion tube (106);
• a support member (104) mounted to rotate on the axle and constrained in rotation with the torsion tube;
• braking actuators (110) carried by the support member for selectively pressing the disks together; and
• a drive member (130) for selectively driving the support member in rotation;
the device being **characterized in that** the brake actuators are electromechanical actuators and **in that** the support member carries a secondary (120) of a transformer having a primary (121) arranged facing the support member while being stationary in rotation, the secondary being electrically connected to the actuators and the primary being adapted to being connected to a non-DC voltage source.

2. A device according to claim 1, wherein each actuator (110) comprises:
• a brushless DC electric motor (1);
• a pusher that is movable linearly and that is mechanically connected to the motor so as to move in response to rotation of the motor;
• a static contactor for providing a polyphase voltage to the motor by interrupting and sequencing input voltage pulses as a function of information about the angular position of a rotor of the motor; and
• a sensor for sensing the angular position of the rotor and delivering said information;
the voltage pulses being delivered by a voltage pulse source of the aircraft that is connected to the primary of the transformer.

3. An aircraft undercarriage including at least one axle receiving at least one wheel associated with a device for braking/driving the wheel according to any preceding claim.
